# FASCICULE DE BREVET EUROPEEN

(11) **EP 0 516 825 B1**
(45) Date de publication et mention de la délivrance du brevet: **19.04.1995**
(21) Numéro de dépôt: 92903335.5
(22) Date de dépôt: 20.12.1991
(51) Int. Cl.: F16L 59/153

(54) **CONDUITE FLEXIBLE A PROTECTION THERMIQUE AMELIOREE**
FLEXIBLE ROHRLEITUNG MIT VERBESSERTEM WÄRMESCHUTZ
FLEXIBLE CONDUIT WITH IMPROVED THERMAL PROTECTION

(30) Priorité: 21.12.1990 FR 9016086
(43) Date de publication de la demande: 09.12.1992
(73) Titulaire: COFLEXIP, 92100 Boulogne-Billancourt (FR)
(72) Inventeur: LEQUEUX, Jean-Michel, F-78110 Le Vésinet (FR)
(74) Mandataire: Levy, David
(86) Numéro de dépôt international: FR9101045
(87) Numéro de publication internationale: WO9211487

(56) Documents cités:
- DE-A- 2 558 847
- GB-A- 2 031 103
- GB-A- 2 180 032
- NL-A- 6 810 856
- US-A- 4 157 101

## Description

La présente invention concerne une conduite flexible à protection thermique améliorée et, plus particulièrement, des conduites flexibles dans lesquelles circule un fluide à pression élevée, comme par exemple celles utilisées dans les installations de recherche et d'exploitation des gisements d'hydrocarbures situés aussi bien dans le sous-sol terrestre que marin.

Lorsque de tels flexibles sont installés dans des zones où des risques d'incendie sont importants, telles que plateformes de forage, ou lorsqu'ils sont reliés à des organes de production, de liaison, de commande et/ou de sécurité de parties d'installation pétrolière, leur détérioration par une élévation subite et/ou constante de la température ambiante peut conduire à des accidents très graves tant pour le personnel que les autres parties de l'installation qui se trouvent à proximité des conduites flexibles détériorées.

Tout d'abord, il faut noter d'une part, que les diamètres des conduites flexibles concernées par la présente invention peuvent varier entre environ 2,5 et 30 cm et, d'autre part, que la pression circulant à l'intérieur des conduites flexibles peut atteindre 1000 bars et plus.

On comprend, dans ces conditions, qu'une fuite quelconque dans ces conduites flexibles et notamment due à un incendie local, peut être lourde de conséquences. C'est la raison pour laquelle on a toujours cherché à préserver l'étanchéité et la résistance mécanique desdites conduites flexibles, lors d'un incendie, pour qu'il soit possible de maintenir le débit du fluide sans fuite à la pression de service jusqu'à ce que les opérations d'arrêt de débit soient effectuées, ou pendant le temps nécessaire à maîtriser l'incendie.

Bien qu'il n'existe pas de normes précises, il est recommandé de faire en sorte que les conduites flexibles doivent résister pendant 30 minutes lorsqu'elles sont soumises à une température ambiante de 700°C.

Les conduites flexibles utilisées dans les applications mentionnées précédemment et qui ne sont nullement limitatives, comportent généralement au moins une gaine étanche et au moins une couche d'armures. Typiquement, les conduites flexibles concernées comprennent au moins une couche d'armures comportant des fils métalliques, la section des fils pouvant être de forme quelconque. Souvent, les conduites flexibles comportent deux gaines, l'une externe autour des nappes d'armures, l'autre interne à ladite couche d'armures et ce, en fonction des utilisations précises desdites conduites flexibles. Certaines conduites flexibles comprennent également une troisième gaine, intermédiaire, disposée entre deux couches d'armures.

En outre, les conduites flexibles concernées sont couramment munies d'une protection extérieure consistant en une bande métallique enroulée en hélice à faible pas; par exemple la bande est constituée par un feuillard profilé dit "agrafable". Toutefois, il est important de noter que cette bande ne visait nullement une protection thermique mais seulement était destinée à protéger la conduite flexible des agressions mécaniques environnantes telles que frottement et/ou écrasement. Dans ces conditions, on observe que, lorsque la conduite flexible est soumise à la chaleur dégagée lors d'un incendie, la ou les gaines plastiques commencent à fondre. C'est la gaine externe qui fond la première puis, en raison des phénomènes de conduction de chaleur entre les éléments constitutifs de la conduite flexible, la conductivité thermique des nappes de fils métalliques d'armure étant très élevée, c'est au tour de la gaine interne de se ramollir progressivement. La gaine interne qui est conçue pour être une barrière d'étanchéité, en se ramollissant, pénètre par extrusion sous l'effet de la pression interne du fluide, à travers des interstices des armures, pour finalement créer une fuite et permettre au fluide de jaillir hors de la conduite.

Dans le cas de matériaux thermoplastiques habituellement utilisés pour la confection des gaines externe et interne, la température de fusion est entre 130°C et 200°C. Certes, la bande métallique retarde la destruction et/ou le ramollissement des gaines mais ne peut les empêcher lorsque la température est élevée.

Dans GB-A-2 180 032 il est décrit un tube en acier muni d'une couche d'isolation thermique constituée par une couche d'épaisseur relativement importante d'un mélange de caoutchouc et de particules de liège. Le tube en acier est destiné à être immergé dans l'eau de mer et la couche thermique a pour fonction de réduire la dissipation thermique vers les couches externes du fluide circulant dans le tube en acier, de manière à obtenir, en sortie du tube en acier, un fluide à une température convenable. Le tube de liège est enrobé dans une couche en caoutchouc résistant mal aux températures élevées.

La présente invention a pour but d'améliorer la protection des conduites flexibles ayant une structure selon le préambule de la revendication 1 et telles que connues, par exemple, de DE-A-25 58 847, en présence ou à proximité d'une zone dans laquelle règne une température élevée susceptible de modifier les caractéristiques mécaniques et/ou physiques d'au moins certains éléments constitutifs desdites conduites flexibles.

Ceci est possible grâce aux caractéristiques de la seconde partie de la revendication 1.

La barrière thermique ainsi créée autour de la conduite flexible permet à cette dernière de résister à des températures atteignant et pouvant dépasser 700°C pendant une durée d'au moins 30 minutes ce qui est considéré, dans l'état actuel de la technique comme suffisant pour au moins arrêter le débit de fluide dans ces conduites flexibles si l'incendie ne peut être maîtrisé durant ce laps de temps.

De façon avantageuse, au moins une couche d'armures étant disposée entre une gaine d'étanchéité interne et une gaine extérieure, l'enveloppe de protection est disposée autour de ladite gaine extérieure.

On a constaté que les performances du flexible relatives à la tenue aux températures élevées étaient nettement améliorées grâce à la couche métallique externe constituée par un tube métallique flexible extérieur. De préférence, le tube métallique présente de bonnes qualités de réflexion de la chaleur. Ainsi, la chaleur susceptible d'être transmise notamment à la gaine extérieure de la conduite flexible, qui peut être un des premiers éléments constitutifs à être atteint, est en partie réfléchie par le tube extérieur métallique. Puis la température diminue au fur et à mesure que la chaleur franchit les obstacles successifs, avant d'atteindre la gaine extérieure.

D'autres avantages et caractéristiques ressortiront mieux à la lecture de la description de plusieurs modes de réalisation selon l'invention, ainsi que des dessins annexés sur lesquels :

La figure 1 est une vue en perspective, partiellement arrachée, d'un premier mode de réalisation suivant l'invention.

La figure 2 est une vue en perspective, partiellement arrachée, d'un deuxième mode de réalisation suivant l'invention.

La figure 3 est une vue en perspective, partiellement arrachée et coupée, d'un troisième mode de réalisation suivant l'invention.

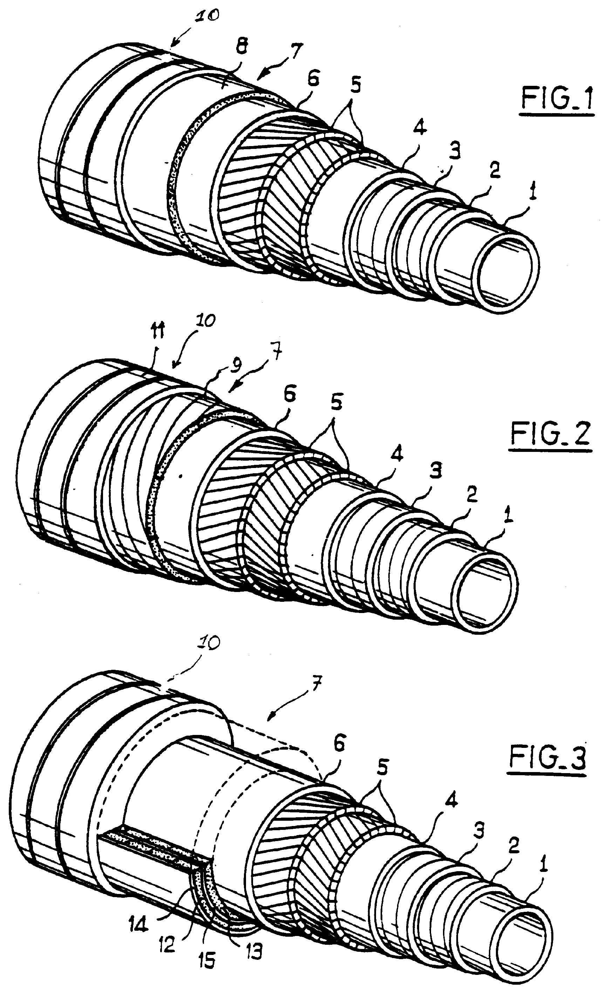

Une conduite flexible telle que représentée sur la figure 1 comprend un tube ou gaine polymérique interne 1 étanche réalisé de préférence en un matériau thermoplastique tel que polyamide, polyéthylène, PVDF, ou autre matière appropriée, une ou deux carcasses intérieures 2 ou 3 résistant à la pression interne de la conduite et constituée(s) par l'enroulement en hélice d'un fil ou d'une bande métallique, une gaine intermédiaire 4 réalisée avec le même matériau thermoplastique que le tube interne 1 ou en un autre matériau, au moins une couche d'armures constituée chacune par deux nappes 5 de fils dont l'angle d'armage ou angle d'inclinaison des fils sur l'axe longitudinal de la conduite flexible, est inférieur ou égal à 55°, et une gaine extérieure 6 en matière thermoplastique. L'angle d'armage des fils d'une nappe 5 peut varier d'une nappe à l'autre, et les fils peuvent être croisés d'une nappe à l'autre, comme c'est généralement le cas. La structure et la nature des éléments constitutifs de la conduite flexible sont choisies en fonction des conditions d'utilisation de ladite conduite flexible. De même, la matière de la gaine extérieure 6 peut être identique ou différente de celle de la gaine intérieure d'étanchéité 1. En variante de la figure 1, la protection thermique selon l'invention est avantageusement utilisable, également, dans le cas de conduite flexible comprenant une gaine interne 1, une ou deux carcasses 2 ou 3, au moins une couche d'armures 5 et une gaine extérieure 6, mais ne présentant pas de gaine intermédiaire 4.

Il est à noter que l'invention s'applique également aux tubes "Rough-bore" comprenant, à l'intérieur de la gaine d'étanchéité interne 1, une carcasse intérieure constituée par une bande métallique enroulée à faible pas et présentant, de préférence la forme d'un feuillard agrafé.

Selon l'invention, on dispose au-dessus de la conduite flexible une gaine de protection thermique 7 présentant une épaisseur égale ou supérieure à 2 mm, et qui, sur la figure 1, affecte la forme d'un manchon 8 et qui est réalisée en un matériau composite comportant des particules de liège. De préférence, le matériau composite est constitué par des particules de liège agglomérées avec un liant plastique.

Mieux encore, des particules de liège de 1 à 2 mm de diamètre sont noyées dans une matrice en matériau, en particulier élastomérique, à caractère ignifuge tel qu'un polymère contenant un halogène, entre autres du chlore, avec, éventuellement, addition d'un agent ignifugeant tel que du trioxyde d'antimoine, ou de l'alumine hydraté. A titre de polymère pouvant constituer la matrice, on peut citer les polymères élastomériques chlorosulfonés, ou, de façon particulièrement avantageuse, le caoutchouc chloroprène (néoprène). La composition comprenant les particules de liège et le polymère étant complétée par divers éléments additifs tels qu'agent de vulcanisation, accélérateur de vulcanisation, agent anti-chaleur, un plastifiant (huile de pétrole), un colorant, il est possible, en mettant en oeuvre des procédés de fabrication bien connus, de réaliser un matériau composite comportant des particules de liège et présentant une certaine cohésion mécanique, ce matériau s'étant révélé apte à constituer l'enveloppe de protection thermique. Des résultats intéressants sont obtenus avec des matériaux présentant une densité moyenne de l'ordre de 500 à 800 kg/m³, et avantageusement environ 650 à 700 kg/m³, la conductibilité thermique moyenne d'un tel matériau composite pouvant être égale ou inférieure à environ 0,30 W/m.°C; par exemple de l'ordre de 0,20 W/m.°C.

Il va de soi que la densité du composite ainsi obtenu est fonction du pourcentage en liège dans le caoutchouc chloroprène, lequel pourcentage dépend également de la structure de la conduite flexible à protéger et/ou des conditions d'utilisation et de la température à laquelle ladite conduite flexible doit résister.

Comme cela est représenté sur la figure 2, la gaine 7 peut avantageusement être constituée par l'enroulement d'une bande 9, d'épaisseur d'environ 6 mm, dont les spires peuvent être jointives ou disjointes avec de préférence un faible déjoint ou chevauchantes les unes sur les autres, la largeur du recouvrement d'une spire sur l'autre pouvant être, par exemple, légèrement inférieure à la moitié de la largeur de la bande. De bons résultats sont obtenus avec une bande ayant une épaisseur de 4 à 8 mm, en particulier lorsque le diamètre intérieur de la conduite flexible est compris entre 30 et 150 mm, ce qui correspond typiquement à certaines applications intéressantes de l'invention; mais l'épaisseur peut également atteindre, voire dépasser, 10 mm, en fonction des caractéristiques du flexible et des conditions d'utilisation. On peut ainsi, à l'aide d'une machine d'un type connu telle qu'une rubaneuse, réaliser facilement et économiquement l'enveloppe de protection 7 d'une conduite flexible en enroulant une bande 9 réalisée préalablement en un matériau composite comportant des particules de liège, en particulier un matériau présentant une résistance à la traction égale ou supérieure à environ 1 daN/cm2, de préférence à environ 5 daN/cm², et apte à supporter un allongement de par exemple 10 % à 20 %.

De façon avantageuse, la bande 9 est vulcanisée avant d'être enroulée sur le flexible. Une telle bande est conforme à la norme BS AU 120 et aux normes ASTM F 104 et F 36.

Alternativement, lorsque la gaine présente la forme du manchon 8 illustré par la figure 1, elle peut être constituée par un manchon ou une pluralité de manchons enfilés sur la conduite flexible, ou par des coquilles, par exemple des paires de demi-coquilles, chaque coquille pouvant être constituée par au moins deux éléments couvrant chacun un secteur du contour circulaire de la gaine extérieure 6. Le manchon 8 peut également être mis en place de façon continue en grande longueur par extrusion d'un mélange de particules de liège et d'élastomère avec divers éléments additifs adéquats, l'opération d'extrusion étant effectuée de façon connue avec une tête d'équerre autour du noyau que constitue la conduite flexible revêtue de la gaine extérieure 6, et pouvant être suivie d'une opération de vulcanisation de l'élastomère.

L'ensemble composé par la conduite flexible et la gaine de protection 7 (telle que le manchon 8 ou la nappe constituée par l'enroulement des bandes 9) est recouvert par un tube métallique flexible extérieur 10 qui complète la protection thermique et il est constitué par l'enroulement d'une bande de métal 11 qui présente la particularité d'avoir un bon pouvoir de réflexion de la chaleur, tel qu'un acier inoxydable, par exemple du type austénitique. Ladite bande métallique peut être un simple feuillard continu et de largeur limitée, enroulé à plat, ou encore un feuillard formé de façon à présenter une configuration en S aplatie de sorte que les spires adjacentes peuvent être en recouvrement l'une par rapport à l'autre.

De préférence, la bande métallique présente une section agrafable avec des reliefs radiaux permettant de limiter le déplacement relatif des spires dans la longueur de la conduite. En particulier, la bande métallique peut être réalisée sous la forme connue d'un feuillard agrafé tel que décrit, par exemple, dans le brevet FR-2 555 920. Alternativement, le tube métallique extérieur peut être réalisé sous la forme d'un tube onduleux.

Dans une forme particulière de réalisation représentée sur la figure 3, la conduite flexible comprend, entre le tube extérieur 10, et, la gaine externe 6, deux bandes enroulées de liège aggloméré 12 et 13 et au moins un et de préférence deux rubans adhésifs 14 et 15 dont un 15 est disposé entre les bandes de liège 12 et 13. Les rubans adhésifs 14 et 15 peuvent être éventuellement renforcés par des fibres de verre ou tout autre matériau équivalent.

Des essais ont été réalisés sur une conduite flexible, l'ensemble présentant de l'intérieur vers l'extérieur la structure suivante :
- un tube d'étanchéité interne 1 en polyamide avec un diamètre intérieur de 76 mm et une épaisseur de 6 mm,
- une voûte de pression 2 en fil d'acier du type agrafable à faible pas,
- une voûte de pression de renforcement en fil acier plat 3, à faible pas d'hélice,
- une gaine intermédiaire 4 en polyéthylène d'épaisseur 2 mm,
- deux nappes 5 de fils d'armure en fils aciers disposées symétriquement avec un angle d'armage à 35°,
- un ruban adhésif, non représenté, enroulé sur la nappe supérieure 5,
- une gaine extérieure 6 en polyéthylène d'épaisseur 5 mm,
- une enveloppe de protection thermique 7 en aggloméré de liège d'épaisseur 6 mm,
- un tube extérieur 10 en feuillard agrafé en acier inox du type austénitique AISI 304.

Dans le cas de la conduite flexible soumise à l'essai, l'enveloppe de protection thermique était constituée par une nappe d'une bande 9 en aggloméré liège caoutchouc chloroprène présentant les caractéristiques suivantes :
- granulométrie des particules de liège 1 à 2 mm, densité moyenne environ 660 à 670 Kg/m³, conductibilité thermique de l'ordre de 0,20 W/ m.°C, résistance à la traction de l'ordre de 10 daN/ cm² (1 MPa).

La bande avait une épaisseur de 6 mm et une largeur de 60 mm, et était enroulée en une couche simple à spires à peu près jointives sur un diamètre de 140 mm correspondant au diamètre extérieur de la gaine extérieure 6.

Un embout ayant été monté à chaque extrémité d'un tronçon prélevé sur une conduite fabriquée en grande longeur, on a ainsi réalisé une conduite flexible de longueur 5,5 m semblable aux conduites utilisées couramment qui ne comportent pas la couche supplémentaire de protection thermique.

La conduite flexible ci-dessus a été soumise à un essai de résistance au feu dans les conditions suivantes :

La conduite flexible est :
1. obturée aux deux extrémités par des brides pleines et des joints métalliques,
2. remplie d'eau sous une pression de 1040 bars,
3/- l'une des extrémités qui était directement exposée au feu, était protégée par un capot de tôle recouvrant une isolation en fibres réfractaires CERABLANKET ^{(R)} de MANVILLE.

Une longueur de 3 m de la conduite flexible fut alors exposée à une température de 700° C, atteinte en 5 minutes, et maintenue ensuite égale à 700° C pendant l'opération de chauffage du four dont la durée totale a atteint 80 minutes. La pression de l'eau dans la conduite flexible ayant été maintenue constante, égale à 1040 bars pendant toute la durée de l'essai, le chauffage du four a été interrompu au bout de 80 minutes sans qu'on ait pu constater la moindre fuite.

Les résultats ont montré que la température de l'eau n'a pas dépassé 140°C, ce qui est très inférieur à la température de fusion (183°C) du polyamide constituant la gaine interne d'étanchéité.

Le résultat positif ainsi obtenu, qui allait bien au-delà de ce qui était envisagé a priori, peut sembler étonnant, en particulier si on considère le fait que le coefficient global d'isolation thermique de la conduite flexible se trouvait relativement peu augmenté du fait qu'on lui ajoutait l'enveloppe de protection thermique, puisque l'épaisseur et le coefficient de conductibilité thermique de l'enveloppe sont du même ordre de grandeur que ceux de chacune des trois gaines de la conduite flexible. La cause du bon résultat ainsi obtenu réside probablement dans la tenue au feu de l'aggloméré de liège, qui est supérieure à celle des matériaux plastiques composant les gaines. En effet, on a constaté que, bien que calciné, l'aggloméré de liège est demeuré en place, formant entretoise entre le tube en acier inox extérieur et les fils d'armure alors que la gaine externe plastique de la conduite flexible était sensiblement dégradée, et empêchant ainsi l'apparition d'un effet de pont thermique qui aurait considérablement accéléré l'augmentation de température de la gaine plastique d'étanchéité interne et de l'eau contenue dans le flexible.

Dans le cas de l'exemple décrit ci-dessus relatif à un flexible soumis aux essais précités, il a été constaté que le coefficient de conductibilité thermique linéique (en coefficient d'échange thermique par mètre linéique de conduite W/m et °K,) est réduit d'environ de 27 % si on considère un flexible selon l'invention par rapport à un même flexible ne comprenant pas de bande liège.

De plus, on a trouvé que le tube métallique sert à éviter des points chauds ponctuels car il répartit la chaleur tout autour du flexible et, en particulier, autour de l'enveloppe thermique qui est donc exposée sur toute sa surface à une température sensiblement égale.

Il apparaît en outre que la combinaison de la gaine de protection en liège aggloméré et du tube métallique flexible extérieur a un effet synergique ayant pour conséquence d'augmenter la protection de la conduite flexible contre les températures élevées. En effet, en plus de son rôle protecteur propre, par réflexion de la chaleur, le tube métallique flexible extérieur permet, en cas d'incendie, d'améliorer la tenue de la couche de liège aggloméré du fait que cette dernière se trouve en espace confiné à l'intérieur dudit tube métallique.

Il va de soi que si les conditions de tenue aux températures élevées et/ou de durée d'exposition auxdites températures devenaient plus sévères que celles indiquées dans la description, alors il serait possible d'augmenter l'épaisseur de la gaine de composite, qui peut atteindre plusieurs centimètres ; la protection thermique et plus spécialement l'aggloméré de liège continue à former entretoise tout en étant doté d'une certaine isolation thermique bien qu'étant à l'état calciné.

Enfin, il est possible d'insérer entre le tube métallique et l'aggloméré de liège une couche de matériau à très haute tenue au feu, comme par exemple comportant des fibres réfractaires, tel que le matériau; commercialisé sous la dénomination CERABLANKET.

## Revendications

1. Conduite flexible à protection thermique améliorée dans laquelle est susceptible de circuler un fluide sous pression et comprenant au moins une gaine ou tube d'étanchéité en matériau polymérique (1), au moins une armure (5), des moyens d'isolation thermique et une gaine extérieure (6) de protection disposée autour de l'armure, caractérisée en ce que les moyens d'isolation thermique sont des moyens de protection thermique contre les températures élevées et sont constitués par une gaine (7) en matériau composite comportant des particules de liège et entourant ladite gaine extérieure et entourée d'un tube flexible métallique (10).

2. Conduite flexible selon la revendication 1, caractérisée en ce que le matériau composite est du liège aggloméré.

3. Conduite flexible selon l'une des revendications 1 ou 2, caractérisée en ce que la densité moyenne du matériau composite est comprise entre 500 et 800 Kg/m³.

4. Conduite flexible selon l'une des revendications 1 à 3, caractérisée en ce que la conductibilité thermique du matériau composite est inférieure à 0,30 W/m.°C.

5. Conduite flexible selon l'une des revendications 1 à 4, caractérisée en ce que la gaine de composite est réalisée à partir d'au moins une bande enroulée en hélice au-dessus de l'armure avec un angle important par rapport à l'axe longitudinal de ladite conduite flexible.

6. Conduite flexible selon la revendication 5, caractérisée en ce que les spires de l'hélice sont jointives ou légèrement disjointives.

7. Conduite flexible selon la revendication 5, caractérisée en ce que les spires de l'hélice se chevauchent en partie les unes sur les autres.

8. Conduite flexible salon la revendication 1, caractérisée en ce que la gaine de composite (7) est un manchon cylindrique (8) enfilé au-dessus de l'armure.

9. Conduite flexible selon la revendication 1, caractérisée en ce que la gaine de composite est réalisée par extrusion directe au-dessus de l'armure.

10. Conduite flexible selon la revendication 1, caractérisée en ce que la gaine de composite est constituée par des coquilles jointives.

11. Conduite flexible selon la revendication 1, caractérisée en ce que la protection thermique comporte au moins deux couches concentriques (12, 13) de matériau composite comprenant des particules de liège.

12. Conduite flexible selon la revendication 11, caractérisée en ce qu'au moins un ruban adhésif (15) est interposé entre les couches concentriques.

13. Conduite flexible selon l'une des revendications précédentes, caractérisée en ce qu'une couche de matériau à haute tenue au feu est disposée entre le tube métallique (10) et la gaine de composite (7).

## Patentansprüche

1. Flexible Rohrleitung mit verbessertem Wärmeschutz zur Leitung einer unter Druck stehenden Flüssigkeit, die aus wenigstens einem Dichtungsschlauch oder einer Dichtungsrohrleitung aus Polymer (1), aus wenigestens einer Bandagierung (5), aus Vorrichtungen zur Temperaturisolation und aus einem äußeren Schutzschlauch (6), der um die Bandagierung (5) angeordnet ist, besteht, **dadurch gekennzeichnet,** daß
die Vorrichtungen zur Temperaturisolation Temperaturschutzvorrichtungen gegenüber erhöhten Temperaturen sind und aus einem Schlauch (7) aus Verbundwerkstoff, der Korkteilchen enthält, bestehen, den äußeren Schutzschlauch (6) umhüllen und von einer elastischen Metallrohrleitung (10) eingehüllt werden.

2. Flexible Rohrleitung nach Anspruch 1, dadurch gekennzeichnet, daß der Verbundwerkstoff aus gepreßtem Kork besteht.

3. Flexible Rohrleitung nach einem der Ansprüche 1 oder 2, dadurch gekennzeichnet, daß die durchschnittliche Dichte des Verbundwerkstoffes zwischen 500 und 800 kg/m³ liegt.

4. Flexilbe Rohrleitung nach einem der Ansprüche 2 bis 3, dadurch gekennzeichnet, daß die Wärmeleitfähigkeit des Verbundwerkstoffes unter 0,30 W/m °C liegt.

5. Flexible Rohrleitung nach einem der Ansprüche 1 bis 4, dadurch gekennzeichnet, daß der Verbundschlauch ausgehend von einem Streifen, der in einer Spirale über der Bandagierung mit einem beträchtlichen Winkel in bezug auf die longitudinale Achse der flexiblen Rohrleitung gewickelt ist, ausgeführt ist.

6. Flexible Rohrleitung nach Anspruch 5, dadurch gekennzeichnet, daß die Windungen der Spirale miteinander verbunden sind oder geringfügig voneinander getrennt sind.

7. Flexible Rohrleitung nach Anspruch 5, dadurch gekennzeichnet, daß die Windungen der Spirale sich ein Windungsstück über dem anderen überlappen.

8. Flexible Rohrleitung nach Anspruch 1, dadurch gekennzeichnet, daß der Verbundschlauch (7) eine zylindrische Hülse (8) ist, die über der Bandagierung aufgefädelt ist.

9. Flexible Rohrleitung nach Anspruch 1, dadurch gekennzeichnet, daß der Verbundschlauch durch direktes Extrudieren um die Bandagierung hergestellt ist.

10. Flexible Rohrleitung nach Anspruch 1, dadurch gekennzeichnet, daß der Verbundschlauch aus übereinander geschichteten Schalen besteht.

11. Flexible Rohrleitung nach Anspruch 1, dadurch gekennzeichndet, daß der Temperaturschutz aus wenigstens zwei konzentrischen Schichten (12, 13) aus Verbundwerkstoff, der Korkteilchen enthält, besteht.

12. Flexible Rohrleitung nach Anspruch 11, dadurch gekennzeichnet, daß wenigstens ein Klebeband (15) zwischen den konzentrischen Schichten gelagert ist.

13. Flexbile Rohrleitung nach einem der vorstehenden Ansprüche, dadurch gekennzeichnet, daß eine Schicht aus schwer brennbarem Material zwischen der Metallrohrleitung (10) und dem Verbundschlauch (7) angeordnet ist.

## Claims

1. A flexible pipe with improved thermal protection in which a fluid can flow under pressure and comprising at least one tightness structural member or pipe in polymeric material (1), at least one reinforcement winding (5), a thermal protection means and a protective outer jacket (6) disposed around said reinforcement winding (5), characterized in that the thermal protection means are thermal protection means against high temperatures and consists of a sheath (7) in composite material comprising cork granules, said sheath (7) being around said outer jacket and a flexible metal tube disposed outside and around said sheath of composite material.

2. A flexible pipe according to claim 1, wherein said composite material is agglomerated cork.

3. A flexible pipe according to any one of claims 1 or 2, wherein the average density of said composite material is included between 500 and 800 kg/m³.

4. A flexible pipe according to any one of claims 1 to 3, wherein the thermal conductivity of said composite material is less than 0.3 W/m.°C.

5. A flexible pipe according to any one of claims 1 to 4, wherein said composite sheath (7) is made from at least one strip (9) wound helically over said reinforcement winding (5) at a high angle with regard to the longitudinal axis of said flexible pipe.

6. A flexible pipe according to claim 5, wherein the whorls of said helix are contiguous or slightly out-of-joint.

7. A flexible pipe according to claim 5, wherein said whorls of said helix partially overlap one another.

8. A flexible pipe according to claim 1, wherein said composite sheath (7) is a cylindrical sleeve tube (8) slipped over said reinforcement winding (5).

9. A flexible pipe according to claim 1, wherein said composite sheath (7) is produced by extrusion directly over said reinforcement winding (5).

10. A flexible pipe according to claim 1, wherein said composite sheath (7) is composed of contiguous shells.

11. A flexible pipe according to claim 1, wherein said thermal protection comprises at least two concentric layers (12, 13) of composite material comprising cork granules.

12. A flexible pipe according to claim 11, wherein at least one adhesive tape (15) is interposed between said concentric layers (12, 13).

13. The flexible pipe as claimed in any one of the preceding claims, wherein a layer of material with very good behavior in fire is disposed between the flexible metal tube (10) and the composite sheath (7).
